**Europäisches Patentamt**

**European Patent Office**

**Office européen des brevets**

(19)

(11) Veröffentlichungsnummer: **0 262 459**
**A2**

## (12) EUROPÄISCHE PATENTANMELDUNG

(21) Anmeldenummer: **87112980.5**

(51) Int. Cl.⁴: **G06K 9/68**

(22) Anmeldetag: **04.09.87**

(30) Priorität: **30.09.86 DE 3633296**

(43) Veröffentlichungstag der Anmeldung:
**06.04.88 Patentblatt 88/14**

(84) Benannte Vertragsstaaten:
**DE FR GB IT NL**

(71) Anmelder: **Siemens Aktiengesellschaft Berlin und München**
**Wittelsbacherplatz 2**
**D-8000 München 2(DE)**

(72) Erfinder: **Kuner, Peter, Dipl.-Math.**
**Lorenz-Hagen-Weg**
**D-8000 München 83(DE)**

(54) **Verfahren zur rechnerunterstützten Erkennung graphischer Symbole in technischen Funktionsplänen bei Zeichnungsgenauigkeit und/oder schlechter Lesbarkeit dieser Funktionspläne.**

(57) Ein Verfahren zur rechnerunterstüzten Erkennung graphischer Symbole in technischen Funktionsplänen bei Zeichnungsungenauigkeit und/oder schlechter Lesbarkeit dieser Funktionspläne, mit Schritten zum Abtasten und Einlesen der betreffenden Vorlage, Digitalisieren des eingegebenen Bildinhalts nach Koordinaten der Pixel und deren Helligkeit, Umwandeln und Speichern des Bildinhalts als Darstellung und Beschreibung des Bildes und/oder eines betreffenden Referenzsymbols als einen Graphen, Vergleichen der als Referenzgraphen gespeicherten Referenzsymbole mit einem betreffenden ermittelten Teilgraphen zur Prüfung auf genaue Übereinstimmung, bei dem vorgesehen ist, daß bei erschwerter Erkennbarkeit bzw. Vorliegen einer Erkennungsunsicherheit eines Bildausschnitts eine optimale, jedoch nicht mehr notwendigerweise exakte Übereinstimmung angestrebt wird.

FIG 2

EP 0 262 459 A2

## Verfahren zur rechnerunterstützten Erkennung graphischer Symbole in technischen Funktionsplänen bei Zeichnungsungenauigkeit und/oder schlechter Lesbarkeit dieser Funktionspläne

Die vorliegende Erfindung betrifft ein Verfahren zur rechnerunterstützten Erkennung graphischer Symbole in technischen Funktionsplänen bei Zeichnungsungenauigkeit und/oder schlechter Lesbarkeit dieser Funktionspläne, mit Schritten zum Abtasten und Einlesen der betreffenden Vorlage, Digitalisieren des eingegebenen Bildinhalts nach Koordinaten der Pixel und deren Helligkeit, Umwandeln und Speichern des Bildinhalts als Darstellung und Beschreibung des Bildes und/oder eines betreffenden Referenzsymbols als einen Graphen sowie Vergleichen der als Referenzgraphen gespeicherten Referenzsymbole mit einem betreffenden ermittelten Teilgraphen zur Prüfung auf genaue Übereinstimmung.

Eine maschinelle Mustererkennung ist bei bekannten Verfahren bisher nur in nichtgestörten Vorlagen möglich und erfolgt durch Nachweis einer exakten Übereinstimmung der relationalen Beschreibung eines Referenzsymbols mit demjenigen Teil der betreffenden digitalen Bildbeschreibung, der dem Referenzsymbol entspricht. Der Nachweis wird dabei durch das Lösen des "Teilgraphenisomorphieproblems" geführt. Andere Ansätze, denen eine vollautomatische Generierung der Beschreibungen sowohl des Bildes als auch der Referenzsymbole zugrundeliegt, sind bisher nicht bekannt geworden, und zwar weder für die Behandlung ungestörter Bildvorlagen noch für den Fall, daß das Bild Fehler aufweist.

Durch Zeichnungsungenauigkeit und Fehler bei der Digitalisierung wird der Bildgraph einer Vorlage meist fehlerhaft erstellt. Treten hierdurch Fehler in demjenigen Teil des Bildgraphen auf, der einem gesuchten REferenzsymbol entspricht, so ist die Mustererkennung im allgemeinen nicht möglich, wenn man sich der bisher bekannten Verfahren bedient, die ausschließlich automatisch generierte Beschreibungen sowohl der Referenzsymbole als auch des Bildes verwenden.

Der vorliegenden Erfindung liegt die Aufgabe zugrunde, ein Verfahren der eingangs genannten Art zu - schaffen, mit dessen Hilfe in technischen Funktionsplänen (Schaltpläne, Regel-oder Steuerungsdiagramme etc.), welche in digitaler Form abgespeichert sind, nach deren Umsetzung in eine relationale Struktur ( = Bildgraph) die darin enthaltenen Funktionssymbole zu erkennen, ihre Anschlußpunkte und Verbindungen zu identifizieren und auf diese Weise eine vollständige funktionale Beschreibung des Funktionsplans zu erstellen. Die relationale Beschreibung sowohl des zu analysierenden Bildes als auch der Referenzsymbole soll zuvor automatisch erzeugt werden, und zwar in Form von ungerichteten Graphen.

Die der Erfindung zugrundeliegende Aufgabe wird durch ein wie eingangs genanntes Verfahren und das gemäß dem Oberbegriff des Patentanspruchs 1 beschaffene Verfahren gelöst, das durch die in dem kennzeichnenden Teil des Patentanspruchs 1 angegebenen Merkmale charakterisiert ist.

Das erfindungsgemäße Verfahren liefert im Gegensatz zu bekannten Verfahren auch bei stärkeren Störungen (zerissene Bildlinien, Verschmelzungen einzelner Bildkomponenten) noch korrekte und eindeutige Ergebnisse.

Vorteilhafte Weiterbildungen sind durch in den Unteransprüchen angegebenen Merkmale gekennzeichnet.

Im folgenden wird die Erfindung anhand mehrerer Figuren, die Ausführungsbeispiele betreffen, im einzelnen erläutert.

Fig. 1 zeigt einen Funktionsablaufplan der Vorgänge für das Erstellen eines Graphen für eine Vorlage, die durch eine Bildaufnahmeeinrichtung aufgenommen wird, gemäß an sich bekannter Verfahren.

Fig. 2 zeigt ein Flußdiagramm von Schritten, die durch das Verfahren gemäß der vorliegenden Erfindung zur Lösung der der Erfindung zugrundeliegenden Aufgabe ausgeführt werden.

Fig. 3 zeigt einen Maschinenausdruck, der das Ergebnis der Prüfung eines gestörten Bildgraphen einer NAND-Schaltung repräsentiert. Dieses Ergebnis stellt eine korrekte Mustererkennung dar.

Fig. 4 zeigt einen Maschinenausdruck des Ergebnisses einer fehlerhaften Erkennung.

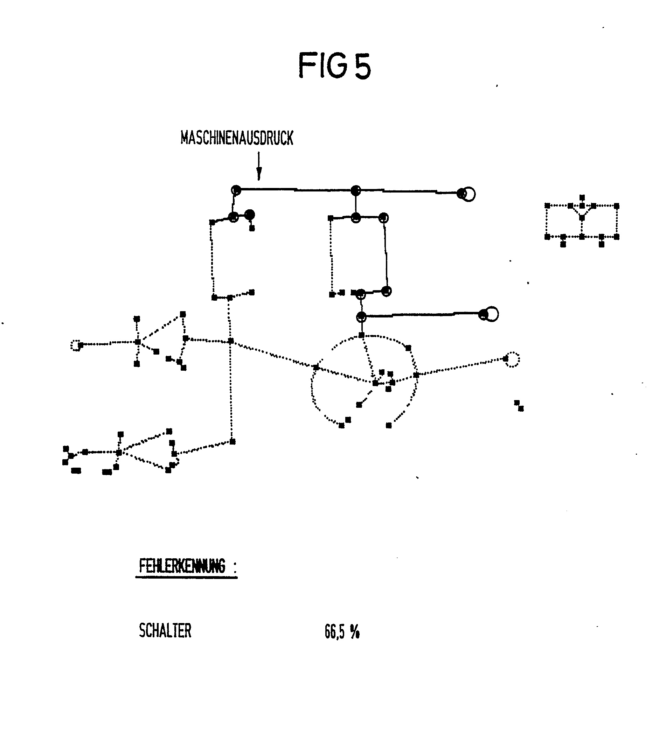

Fig. 5 zeigt einen Maschinenausdruck des Ergebnisses einer weiteren fehlerhaften Erkennung.

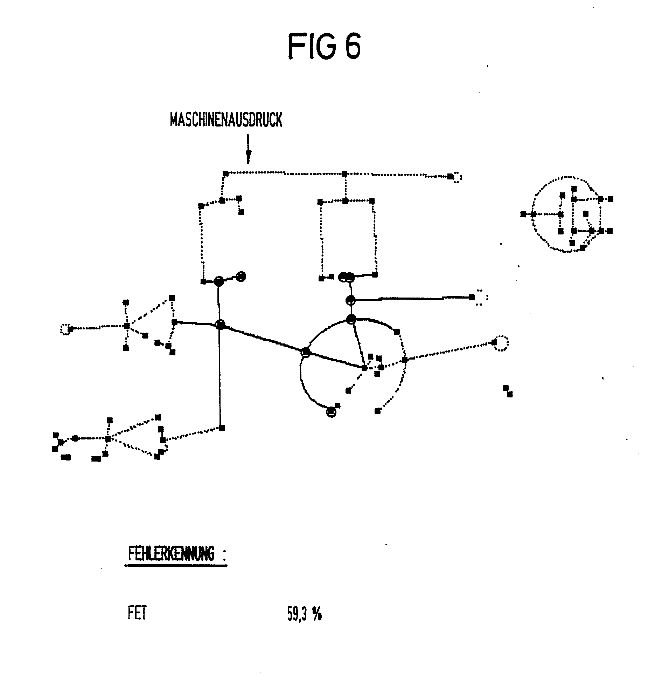

Fig. 6 zeigt einen Maschinenausdruck des Ergebnisses einer weiteren fehlerhaften Erkennung.

Fig. 7 zeigt einen sog. Konfliktgraphen mit Knoten für die bei den Erkennungsvorgängen die Fig. 3 - Fig. 6 betreffen, erzielten TrefferwahrscheinlichkeitsProzentsätze.

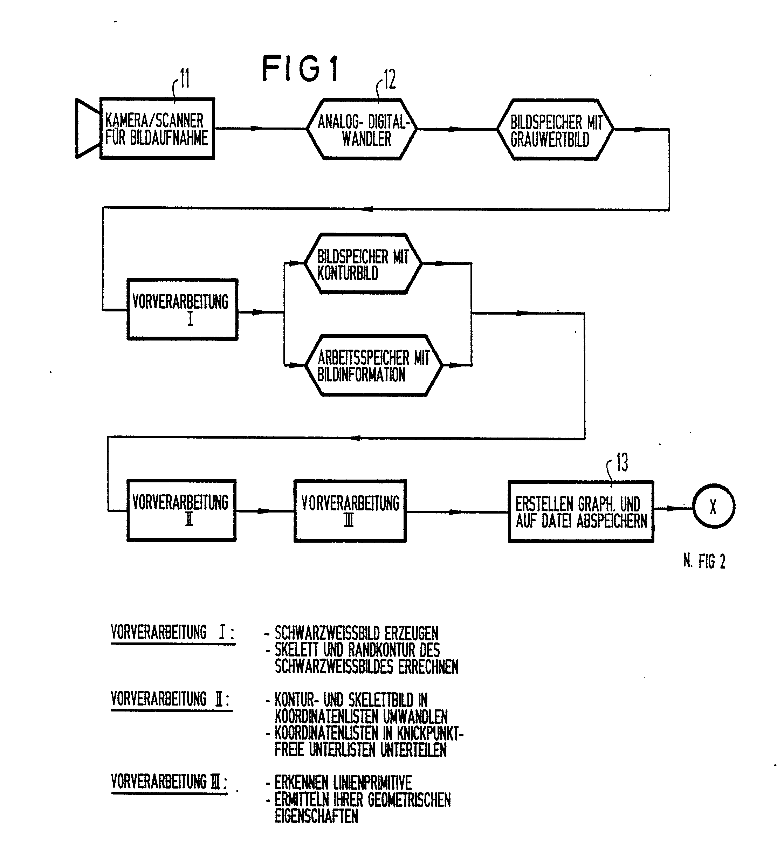

Wie bereits erläutert, zeigt Fig. 1 einen Funktionsablaufplan der Vorgänge für das Erstellen eines Graphen für eine Vorlage, mit Schritten zum Abtasten und Einlesen (11) der betreffenden Vorlage, Digitalisieren (12) des eingegebenen Bildinhalts nach Koordinaten der Pixel und deren Helligkeit sowie Umwandeln und Speichern (13) Bildinhalts als Darstellung und Beschreibung, des Bildes und/oder eines betreffenden Referenzsymbols als eine Graphen. Diesen Schritten folgen Schritte zum Vergleichen der als Referenzgraphen gespeicherten Referenzsymbole mit einem betreffenden ermittelten Teilgraphen zur Prüfung auf genaue Übereinstimmung.

Erfindungsgemäß ist zur Lösung der Aufgabe vorgesehen, daß bei erschwerter Erkennbarkeit bzw. Vorliegen einer Erkennungsunsicherheit eines Bildausschnitts eine optimale, jedoch nicht mehr notwendigerweise exakte Übereinstimmung angestrebt wird, indem jede Erkennung durch Auffinden eines lokalen Maximums einer bestimmten Bewertungsfunktion vorgenommen wird, wobei bei Überschreiten einer vorgegebenen, nichtextremalen Schwelle durch das Maximum der Bewertungsfunktion die Erkennung als solche akzeptiert wird, jedoch bei Erreichen einer für den betreffendn Referenzgraphen ermittelten extremalen Schwelle als sicher erfolgt gilt. Bei akzeptierter, jedoch nicht sicherer Erkennung wird ein bestimmter Vergleich einer bestimmten logischen Beschreibung des betreffenden Referenzgraphen mit einer bestimmten logischen Beschreibung des erkannten Teilgraphen vorgenommen, und bei nicht erfolgter Übereinstimmung wird der Teilgraph als Falscherkennung zurückgewiesen, wobei die logische Beschreibung sowohl des Bild-als auch des Referenzgraphen vorab automatisch generiert wurde. Bei mehreren nicht zurückgewiesenen und sich überlappenden Erkennungsergebnissen wird eine Teilmenge dieser Ergebnisse dergestalt ausgewählt, daß sich die Elemente dieser betreffenden Teilmenge nicht mehr gegenseitig überlappen und die Summe der durch die Bewertungsfunktion angenommenen lokalen Maxima der Elemente dieser Teilmenge ihrer seits maximal ist, so daß mit größtmöglicher Wahrscheinlichkeit die so gewählten Erkennungsergebnisse korrekte Interpretationen des Bildinhaltes darstellen.

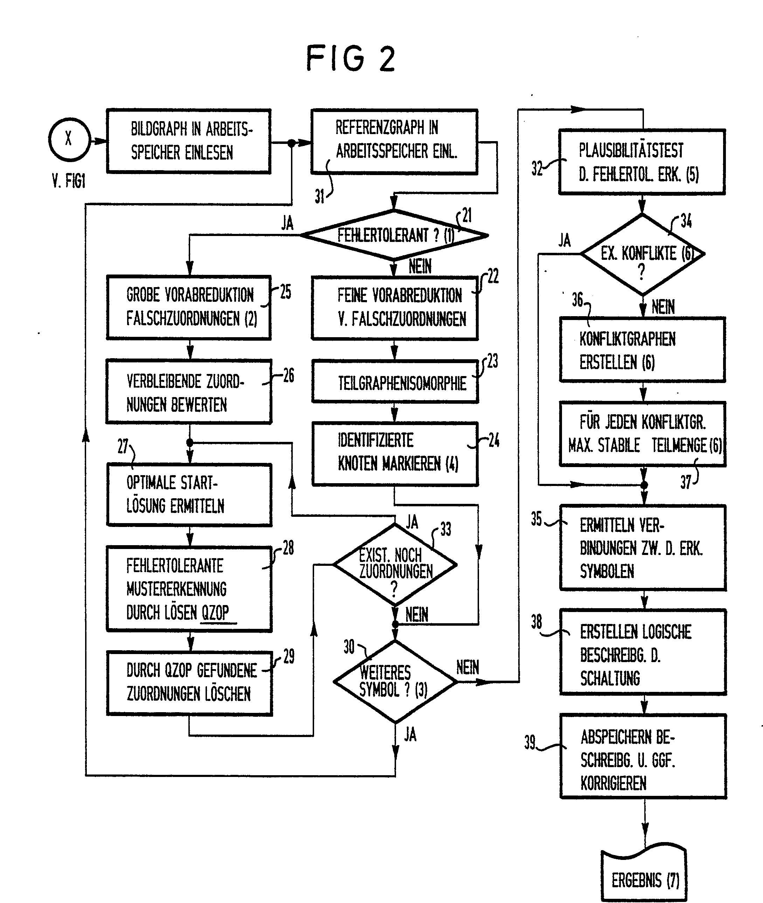

Die Erfindung sieht vor, daß in einem ersten Schritt 21, vergl. Fig. 2, abgefragt wird, ob die Mustererkennung fehlertolerant durchgeführt werden soll oder nicht. Für den Fall, daß die Mustererkennung nichtfehlertolerant durchgeführt werden soll, wird eine vollständige Vorabreduktion in einem Schritt 22 durchgeführt, durch die alle nicht zur sicheren Erkennung des betreffenden Symbols beitragenden Zuordnungsalternativen zum Zwecke einer Einschränkung des Suchbereichs eliminiert werden, wobei der Suchvorgang bezüglich Falschzuordnungen entlastet wird. Daran anschließend werden in einem Schritt 23 sämtliche zum Referenzgraphen isomorphen Teilgraphen bestimmt. Anschließend werden in einem Schritt 24 deren Knoten markiert. Für den Fall, daß die Mustererkennung fehlertolerant durchgeführt werden soll, wird in einem Schritt 25 eine unvollständige Vorabreduktion von Falschzuordnungen durchgeführt. Daran anschließend werden die in einem Schritt 26 verbleibende Zuordnungen bewertet. Daran anschließend wird in einem Schritt 27 eine optimale Startlösung ermittelt. Von der Startlösung ausgehend wird in einem folgenden Schritt 28 eine fehlertolerante Mustererkennung durch Lösen eines quadratischen Zuordnungsproblems QZOP durchgeführt, wodurch der Referenzgraph mit einem Teilgraphen optimal zur Deckung gebracht wird und die Optimalität der Deckung dadurch charaktisiert ist, daß die Bwertungsfunktion hierfür ein lokales Maximum annimmt, welches durch einen Algorithmus ermittelt wird. Daran anschließend werden die durch Lösen des quadratischen Zuordnungsproblems gefundenen Zuordnungen in einem Schritt 29 gelöscht.

Im Falle der feinen Vorabreduktion von Falschzuordnungen wird in einem weiteren Schritt 30 entschieden, ob nach einem weiteren Symbol zu suchen ist oder nicht. Für den Fall, daß ein weiteres Symbol zu suchen ist, wird dessen zugehöriger Referenzgraph in einem Schritt 31 in den Arbeitsspeicher des Rechners eingelesen, aus dem dieser Referenzgraph in dem ersten Schritt 21 des Verfahrens zu der Abfrage verwendet wird, ob die Mustererkennung fehlertolerant durchgeführt werden soll oder nicht. Für den Fall, daß kein weiteres Symbol zu suchen ist, wird in einem Schritt 32 eine Plausibilitätsprüfung der fehlertoleranten Mustererkennung durch einen Regelvergleich durchgeführt , wobei die als nichtplausibel erwiesenen erkannten Teilgraphen als Falscherkennungen zurückgewiesen werden. Im Falle der groben Vorabreduktion von Falschzuordnungen wird in einem weiteren Schritt 3 geprüft, ob noch weitere Zuordnungen bestehen. Für den Fall, daß weitere Zuordnungen bestehen, wird erneut eine optimale Startlösung ermittelt, und für den Fall, daß keine weiteren Zuordnungen bestehen, wird der Schritt 30 zur Prüfung, ob ein weiteres Symbol zu suchen ist, durchgeführt.

Für die nach der Plausibilitätsprüfung in Schritt 32 nicht zurückgewiesenen Symbole wird in einem weiteren Schritt 34 geprüft, ob Konflikte der Mustererkennung existieren oder nicht. Für den Fall, daß keine Konflikte existieren, werden in einem Schritt 35 Verbindungen zu Partnersymbolen, nämlich solchen Symbolen, die für in unmittelbarer funktioneller Verbindung stehende Schaltungselemente dargestellt sind, ermittelt. Für den Fall, daß Konflikte der Mustererkennung existieren, d. h. einzelne Erkennungsergebnisse sich gegenseitig überlappen, werden diese Überlappungen in einem Schritt 36 durch Konfliktgraphen dargestellt. Nach dem Erstellen der Konfliktgraphen wird für jeden Konfliktgraphen in einem Schritt 37 eine unab hängige Teilmenge maximalen Gewichts ermittelt, und der Rest wird eliminiert. Daran anschließend werden ebenfalls Verbindungen zu Partnersymbolen ermittelt (Schritt 35). Nach diesem Schritt wird zum Ermitteln eine logische Beschreibung des Funktionsplans in einem Schritt 38 erstellt. Die logische Beschreibung des Funktionsplans wird schließlich in einem letzten Schritt 39 zu Archivierungszwecken oder zu Zwecken einer Weiterverarbeitung abgespeichert.

Desweiteren ist erfindungsgemäß vorgesehen, daß bei gleichen Trefferwahrscheinlichkeits-Prozentsätzen oder kleinen, die Erkennungssicherheit beeinträchtigenden Differenzen der Trefferwahrscheinlichkeits-Prozentsätze ein Ausstieg des Verfahrens über eine Operatorschnittstelle vorgenommen wird, wonach ein Benutzer des betreffenden Systems von sich aus die korrekten Ergebnisse der Mustererkennung bestimmen kann.

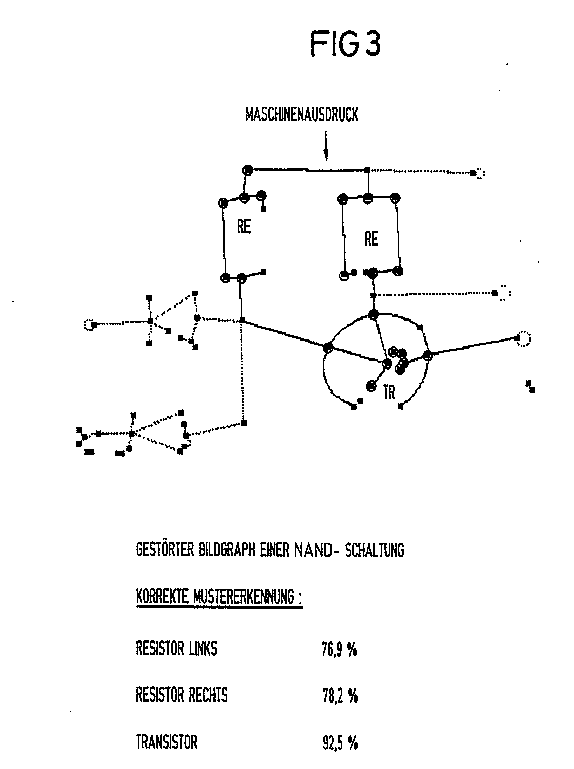

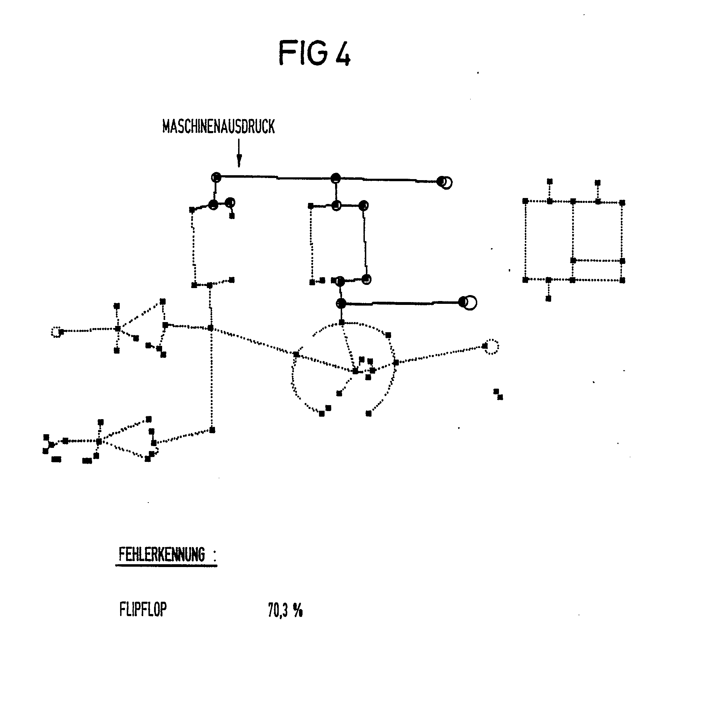

Maschinenausdrucke sowohl für korrekte als auch fehlerhafte Mustererkennungen sind, wie bereits weiter oben erläutert, in den Figuren 3 bzw. 4...6 gezeigt.

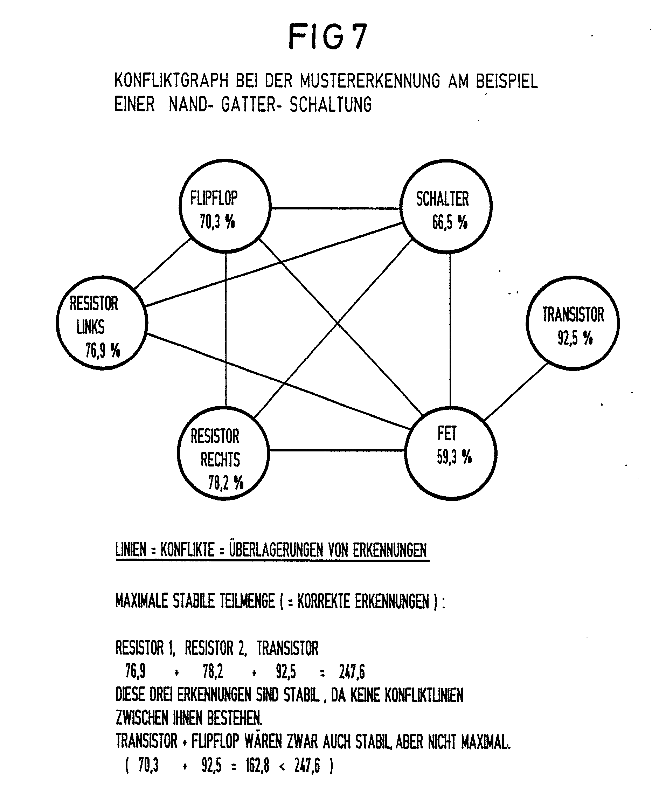

Fig. 7 zeigt, wie bereits ebenfalls erläutert, ein sog. Konfliktgraphen mit Knoten für die beiden Erkennungsvorgänge (vergl. Fig. 3...6) erzielten Trefferwahrscheinlichkeits-Prozentsätze.

In einigen der Schritte, die in Fig. 2 gezeigt sind, sind zur detaillierten Erläuterung derselben Hinweise (1)...(7) auf die folgende Legende zu Fig. 2 angegeben.


Legende zu Fig. 2

(1) Abfrage, ob für das Symbol eine fehlertolerante Mustererkennung durchgeführt werden soll.

(2) Dies bedeutet, daß Zuordnungen von Knoten des Referenzgraphen zu Knoten des Bildgraphen, die mit großer Wahrscheinlichkeit nicht Bestandteil eines korrekten Ergebnisses der Mustererkennung sein können, mit einem entsprechend niedrigen Gewicht bewertet werden. Das Erkennungsverfahren wird auf diese Weise zu einem zielgerichteten Vorgehen hingesteuert, da es die Zuordnungshypothesen, welche mit hoher Wahrscheinlichkeit zu einem korrekten Erkennungsergebnis beisteuern, bei der Suche bevorzugt.

(3) Abfrage an den Benutzer, ob ein weiteres Symbol gesucht werden muß.

(4) Identifizierte Knoten, d. h. solche, die Bestandteile eines sicheren Erkennungsergebnisses sind, werden markiert und bei keinem weiteren Suchvorgang mehr berücksichtigt. Das Verfahren wird so im Verlauf der Mustererkennung sukzessive entlastet.

(5) Ein mit der fehlertoleranten Erkennung identifiziertes Symbol wird daraufhin überprüft, ob die - von Seiten des Anwenders - als funktionale Komponenten gesondert markierten Bestandteile des Referenzgraphen durch die Erkennung eine Zuordnung erhalten haben. Funktionale Komponenten sind z. B. Anschlußknoten bei elektrischen Bauelementen. Falls nicht alle funktionalen Komponenten zugeordnet werden konnten, so wird das Erkennungsergebnis verworfen bzw. der Benutzer über die im Anspruch 3 erwähnte Schnittstelle zum Eingreifen aufgefordert, um die korrekte Zuordnung zu erhalten.

(6) Siehe Fig. 7.

(7) Ergebnis = Gesamtheit aller vollständig identifizierten Bauelemente, Verzweigungen und Anschlüsse der Schaltung oder des Funktionsdiagramms mit den zugehörigen Verbindungen.

Hintergrund der rechnergestützten Erkennung sind folgende an sich bekannte Festlegungen:

Sei G der Referenzgraph und H der Bildgraph.

$V = (V_1, V_2, ..., V_P)$ ist die Menge der Knoten des Referenzgraphen, $W = (w_1, ... w_Q)$ ist die Menge der Knoten des Bildgraphen.

A sei eine Matrix mit P Zeilen und P spalten, die Adjazenzmatrix des Referenzgraphen. Für die Elemente von A gilt:

$a_{i,j} > 0$ , falls die Knoten $v_i$ und $v_j$ des Referenzgraphen G eine gemeinsame verbindende Kante in G besitzen,

$a_{i,j} = 0$ sonst.

B sei eine Matrix mit Q Zeilen und Q Spalten, die Adjazenzmatrix des Bildgraphen. Für die Elemente von B gilt:

$b_{k,n} > 0$ , falls die Knoten $w_k$ und $w_n$ des Bildgraphen H eine gemeinsame verbindende Kante in H besitzen,

$b_{k,n} = 0$ sonst.

Die Werte der Elemente von A und B werden nach gleichen Kriterien berechnet. Die Auswahl dieser Kriterien kann vom Benutzer getroffen werden. Dabei ist zu beachten, daß die Kriterien so gewält werden, daß die Werte von A und B unabhängig von der Anzahl der Knoten und Kanten der Graphen sind.

Nun kann die Mustererkennung zum ersten nichtfehlertolerant durch Nachweis von Teilgraphenisomorphie durchgeführt werden. Teilgraphenisomorphie liegt vor, wenn folgende Bedingungen erfüllt sind:

Es existiert eine Matrix X mit P Zeilen und Q Spalten, deren Elemente nur die Werte 0 und 1 annehmen können, owbei in jeder Zeile von X genau eine 1 und in jeder Spalte von X höchstens eine 1 steht und für alle i = 1,..., P und für alle j = 1,..., Q gilt:

i) $a_{i,j} \leq (X\ B^t X^t)_{i,j}$

wobei die rechte Seite dieser Ungleichung gleich dem Element in der i-ten Zeile und j-ten Spalte der Matrix ist, welche durch Matrizenmultiplikation von X mit der Transponierten von B und der Transponierten von X entsteht.

Zum zweiten kann die Mustererkennung fehlertolerant durchgeführt werden. Dies geschieht durch Lösen eines Quadratischen Zuordnungsproblems QZOP. Die Rechtfertigung hierfür erhält man unmittelbar aus obiger Bedingung für Teilgraphenisomorphie:

i) $a_{i,j} \leq (X\ B^t X^t)_{i,j}$

hieraus folgt, da stets $a_{i,j} \geq 0$ gilt

(ii) $a^2_{i,j} \leq (X\ B^t X^t)_{i,j} \bullet a_{i,j}$

woraus folgt, daß auch gilt

$$\text{iii)} \quad \sum_{i,j=1}^{P} a^2_{i,j} \leq \sum_{i,j=1}^{P} (X\ B^t X^t)_{i,j}\ a_{i,j}$$

Damit die Ungleichung i) für möglichst viele i,j erfüllt wird, ist das Quadratische Zuordnungsproblem QZOP zu lösen:

$$\text{QZOP:} \quad \text{Maximiere} \quad \sum_{i,j=1}^{P} (X\ B^t X^t)_{i,j} \bullet a_{i,j}$$

bezüglich der Elemente von X unter den Nebenbedingungen N1, N2, N3 :

N1: $x_{i,j}$ kann nur die Werte 0 oder 1 annehmen für alle i und k,

$$\text{N2:} \quad \sum_{i=1}^{P} x_{i,k'} \leq 1 \qquad \text{für alle Werte } K' = 1,\ldots,Q$$

$$\text{N3:} \quad \sum_{k=1}^{Q} x_{i',k} = 1 \qquad \text{für alle Werte } i' = 1,\ldots,P$$

Auf diese Weise wird der Referenezgraph optimal mit dem Bildgraphen zur Deckung gebracht. Als Erkennungsschranke gibt man einen Wert S < 100% von $\Sigma\ a^2_{i,j}$ vor; erreicht oder überschreitet die Zielfunktion mit der Lösung X diesen Wert, so wird das Ergebnis als mögliche Erkennung akzeptiert.

## Ansprüche

1.Verfahren zur rechnerunterstützten Erkennung graphischer Symbole in technischen Funktionsplänen bei Zeichnungsungenauigkeit und/oder schlechter Lesbarkeit dieser Funktionspläne, mit Schritten zum
-Abtasten und Einlesen der betreffenden Vorlage,
-Digitalisieren des eingegebenen Bildinhalts nach Koordinaten der Pixel und deren Helligkeit,
-Umwandeln und Speichern des Bildinhalts als Darstellung und Beschreibung des Bildes und/oder eines betreffenden Referenzsymbols als einen Graphen,
-Vergleichen der als Referenzgraphen gespeicherten Referenzsymbole mit einem betreffenden ermittelten Teilgraphen zur Prüfung auf genaue Übereinstimmung,
dadurch **gekennzeichnet,**
-daß bei erschwerter Erkennbarkeit bzw. Vorliegen einer Erkennungsunsicherheit eines Bildausschnitts eine optimale, jedoch nicht mehr notwendigerweise exakte Übereinstimmung angestrebt wird, indem jede Erkennung durch Auffinden eines lokalen Maximums einer bestimmten Bewertungsfunktion vorgenommen wird, wobei bei Überschreiten einer vorgegebenen, nichtextremalen Schwelle durch das Maximum der Bewertungsfunktion die Erkennung als solche akzeptiert wird, jedoch bei Erreichen einer für den betreffen Referenzgraphen ermittelten extremalen Schwelle als sicher erfolgt gilt,

-bei akzeptierter jedoch nicht sicherer Erkennung ein bestimmter Vergleich einer bestimmten logischen Beschreibung des betreffen Referenzgraphen mit einer bestimmten logischen Beschreibung des erkannten Teilgraphen vorgenommen und bei nicht erfolgter Übereinstimmung der Teilgraph als Falscherkennung zurückgewiesen wird, wobei

-die logische Beschreibung sowohl des Bild-als auch des Referenzgraphen vorab automatisch generiert wurde

-bei mehreren nicht zurückgewiesenen und sich überlappenden Erkennungsergebnissen eine Teilmenge dieser Ergebnisse dergestalt ausgewählt wird, daß sich die Elemente dieser betreffenden Teilmenge nicht mehr gegenseitig überlappen und die Summe der durch die Bewertungsfunktion angenommenen lokalen Maxima der Elemente dieser Teilmenge ihrerseits maximal ist, so daß mit größtmöglicher Wahrscheinlichkeit die so gewählten Erkennungsergebnisse korrekte Interpretationen des Bildinhaltes darstellen.

2. Verfahren nach Anspruch 1, dadurch **gekkenzeichnet,**

-daß in einem ersten Schritt abgefragt wird, ob die Mustererkennung fehlertolerant durchgeführt werden soll oder nicht, daß für den Fall, daß die Mustererkennung nichtfehlertolerant durchgeführt werden soll, eine vollständige Vorabreduktion durchgeführt wird, durch die alle nicht zur sicheren Erkennung des betreffenden Symbols beitragenden Zuordnungsalternativen zum Zwecke einer Einschränkung des Suchbereichs eliminiert werden, wobei der Suchvorgang bezüglich Falschzuordnungen entlastet wird, daß daran anschließend sämtliche zum Referenzgraphen isomorphen Teilgraphen bestimmt werden und anschließend deren Knoten markiert werden, daß für den Fall, daß die Mustererkennung fehlertolerant durchgeführt werden soll, eine unvollständige Vorabreduktion von Falschzuordnungen durchgeführt wird, daß daran anschließend verbleibende Zuordnungen bewertet werden, daß daran anschließend eine optimale Startlösung ermittelt wird, daß daran an schließend - von der Startlösung ausgehend - eine fehlertolerante Mustererkennung durch Lösen eines quadratischen Zuordnungsproblems QZOP durchgeführt wird, wodurch der Referenzgraph mit einem Teilgraphen des Bildgraphen optimal zur Deckung gebracht wird und die Optimalität der Deckung dadurch charakterisiert ist, daß die Bewertungsfunktion hierfür ein lokales Maximum annimmt, welches durch einen Algorithmus ermittelt wird, und daß daran anschließend die durch Lösen des quadratischen Zuordnungsproblems gefundenen Zuordnungen gelöscht werden,

- daß im Falle der feinen Vorabreduktion von Falschzuordnungen in einem weiteren Schritt entschieden wird, ob nach einem weiteren Symbol zu suchen ist, daß für den Fall, daß ein weiteres Symbol zu suchen ist, dessen zugehöriger Referenzgraph in den Arbeitsspeicher des Rechners eingelesen wird, aus dem dieser Referenzgraph in dem ersten Schritt des Verfahrens zu der Abfrage verwendet wird, ob die Mustererkennung fehlertolerant durchgeführt werden soll oder nicht, daß für den Fall, daß kein weiteres Symbol zu suchen ist, eine Plausibilitätsprüfung der fehlertoleranten Mustererkennung durch einen Regelvergleich durchgeführt wird, wobei die als nichtplausibel erwiesenen erkannten Teilgraphen als Falscherkennungen zurückgewiesen werden,

-daß im Falle der groben Vorabreduktion von Falschzuordnungen in einem nächsten Schritt geprüft wird, ob noch weitere Zuordnungen bestehen, daß für den Fall, daß weitere Zuordnungen bestehen, erneut eine optimale Startlösung ermittelt wird und daß für den Fall, daß keine weiteren Zuordnungen bestehen, der Schritt zur Prüfung, ob ein weiteres Symbol zu suchen ist, durchgeführt wird,

-daß für die nach der Plausibilitätsprüfung nicht zu rückgewiesenen Symbole in einem weiteren Schritt geprüft wird, ob Konflikte der Mustererkennung existieren oder nicht, daß für den Fall, daß keine Konflikte existieren, Verbindungen zu Partnersymbolen, nämlich solchen Symbolen, die für in unmittelbarer funktioneller Verbindung stehende Schaltungselemente dargestellt sind, ermittelt werden, daß für den Fall, daß Konflikte der Mustererkennung existieren, d. h. einzelne Erkennungsergebnisse sich gegenseitig überlappen, diese Überlappungen durch Konfliktgraphen dargestellt werden, daß nach dem Erstellen der Konfliktgraphen für jeden Konfliktgraphen eine unabhängige Teilmenge maximalen Gewichts ermittelt und der Rest eliminiert wird, daß daran anschließend ebenfalls Verbindungen zu Partnersymbolen, ermittelt werden, daß nach diesem Schritt zum Ermitteln eine logische Beschreibung des Funktionsplans erstellt wird und

-daß die logische Beschreibung des Funktionsplans in einem letzten Schritt zu Archivierungszwecken oder zu Zwecken einer Weiterverarbeitung abgespeichert wird.

3. Verfahren nach Anspruch 1 oder 2, dadurch **gekennzeichnet,** daß bei gleichen Trefferwahrscheinlichkeits-Prozentsätzen oder kleinen, die Erkennungssicherheit beeinträchtigenden Differenzen der Trefferwahrscheinlichkeits-Prozentsätze ein Ausstieg des Verfahrens über eine Operatorschnittstelle vorgesehen ist, wonach ein Benutzer des betreffenden Systems von sich aus die korrekten Ergebnisse der Mustererkennung bestimmen kann.

# FIG 1

KAMERA/SCANNER FÜR BILDAUFNAHME _11_

ANALOG- DIGITAL- WANDLER _12_

BILDSPEICHER MIT GRAUWERTBILD

BILDSPEICHER MIT KONTURBILD

VORVERARBEITUNG I

ARBEITSSPEICHER MIT BILDINFORMATION

VORVERARBEITUNG II

VORVERARBEITUNG III

ERSTELLEN GRAPH. UND AUF DATEI ABSPEICHERN _13_

X

N. FIG 2

VORVERARBEITUNG I:
- SCHWARZWEISSBILD ERZEUGEN
- SKELETT UND RANDKONTUR DES SCHWARZWEISSBILDES ERRECHNEN

VORVERARBEITUNG II:
- KONTUR- UND SKELETTBILD IN KOORDINATENLISTEN UMWANDLEN
- KOORDINATENLISTEN IN KNICKPUNKT- FREIE UNTERLISTEN UNTERTEILEN

VORVERARBEITUNG III:
- ERKENNEN LINIENPRIMITIVE
- ERMITTELN IHRER GEOMETRISCHEN EIGENSCHAFTEN

# FIG 2

BILDGRAPH IN ARBEITS-
SPEICHER EINLESEN

REFERENZGRAPH IN
ARBEITSSPEICHER EINL. — 31

PLAUSIBILITÄTSTEST
D. FEHLERTOL. ERK. (5) — 32

X

V. FIG1

FEHLERTOLERANT ? (1) — 21
JA / NEIN

EX. KONFLIKTE (6) ? — 34
JA / NEIN

GROBE VORABREDUKTION
FALSCHZUORDNUNGEN (2) — 25

FEINE VORABREDUKTION
V. FALSCHZUORDNUNGEN — 22

KONFLIKTGRAPHEN
ERSTELLEN (6) — 36

VERBLEIBENDE ZUORD-
NUNGEN BEWERTEN — 26

TEILGRAPHENISOMORPHIE — 23

FÜR JEDEN KONFLIKTGR.
MAX. STABILE TEILMENGE (6) — 37

OPTIMALE START-
LÖSUNG ERMITTELN — 27

IDENTIFIZIERTE
KNOTEN MARKIEREN (4) — 24

ERMITTELN VER-
BINDUNGEN ZW. D. ERK.
SYMBOLEN — 35

FEHLERTOLERANTE
MUSTERERKENNUNG
DURCH LÖSEN QZOP — 28

EXIST. NOCH
ZUORDNUNGEN ? — 33
JA / NEIN

ERSTELLEN LOGISCHE
BESCHREIBG. D.
SCHALTUNG — 38

DURCH QZOP GEFUNDENE
ZUORDNUNGEN LÖSCHEN — 29

WEITERES
SYMBOL ? (3) — 30
NEIN / JA

ABSPEICHERN BE-
SCHREIBG. U. GGF.
KORRIGIEREN — 39

ERGEBNIS (7)

0 262 459

# FIG 3

MASCHINENAUSDRUCK

GESTÖRTER BILDGRAPH EINER NAND- SCHALTUNG

<u>KORREKTE MUSTERERKENNUNG :</u>

RESISTOR LINKS            76,9 %

RESISTOR RECHTS           78,2 %

TRANSISTOR                92,5 %

# FIG 4

MASCHINENAUSDRUCK

FEHLERKENNUNG :

FLIPFLOP                70,3 %

# FIG 5

MASCHINENAUSDRUCK

FEHLERKENNUNG :

SCHALTER                66,5 %

# FIG 6

MASCHINENAUSDRUCK

FEHLERKENNUNG :

FET                    59,3 %

# FIG 7

KONFLIKTGRAPH BEI DER MUSTERERKENNUNG AM BEISPIEL
EINER NAND- GATTER- SCHALTUNG

LINIEN = KONFLIKTE = ÜBERLAGERUNGEN VON ERKENNUNGEN

MAXIMALE STABILE TEILMENGE ( = KORREKTE ERKENNUNGEN ) :

RESISTOR 1, RESISTOR 2, TRANSISTOR
  76,9   +   78,2   +   92,5   =   247,6
DIESE DREI ERKENNUNGEN SIND STABIL , DA KEINE KONFLIKTLINIEN
ZWISCHEN IHNEN BESTEHEN.
TRANSISTOR + FLIPFLOP WÄREN ZWAR AUCH STABIL, ABER NICHT MAXIMAL.
  ( 70,3   +   92,5  =  162,8  <  247,6 )